# EUROPÄISCHE PATENTSCHRIFT

(11) **EP 0 803 710 B1**
(45) Veröffentlichungstag und Bekanntmachung des Hinweises auf die Patenterteilung: **30.01.2002**
(21) Anmeldenummer: 97106230.2
(22) Anmeldetag: 16.04.1997
(51) Int. Cl.: G01D 5/347

(54) **Lichtelektrische Positionsmesseinrichtung**
Opto-electrical position measuring device
Dispositif opto-électrique de mesure de position

(30) Priorität: 26.04.1996 DE 19616707
(43) Veröffentlichungstag der Anmeldung: 29.10.1997
(73) Patentinhaber: Dr. Johannes Heidenhain GmbH, 83292 Traunreut (DE)
(72) Erfinder: Nelle, Günther, Dr.-Ing., 83346 Bergen (DE); Fernsebner, Peter, 83313 Siegsdorf (DE)

(56) Entgegenhaltungen:
- EP-A- 0 328 661
- DE-A- 2 505 587
- DE-C- 4 338 680
- US-A- 4 982 508
- US-A- 5 030 825

## Beschreibung

Die Erfindung betrifft eine lichtelektrische Positionsmeßeinrichtung gemäß dem Oberbegriff des Anspruches 1.

Derartige Meßeinrichtungen werden zur inkrementalen oder absoluten Positionsbestimmung bei Bearbeitungsmaschinen sowie bei Koordinatenmeßmaschinen eingesetzt.

Bei lichtelektrischen Positionsmeßeinrichtungen wird ein Maßstab berührungslos mittels einer Lichtquelle und Photodetektoren abgetastet. Die dabei erzeugten elektrischen Signale sind relativ klein und daher störempfindlich.

In der DE 25 05 587 C3 ist eine Längenmeßeinrichtung beschrieben, von der unsere Erfindung ausgeht. In einem Gehäuse ist ein Glasmaßstab unter Zwischenschaltung einer hochelastischen Klebeschicht befestigt. Die Abtasteinheit stützt sich über Gleitschuhe direkt am Glasmaßstab ab, wodurch der Maßstab eine Führung der Abtasteinheit darstellt.

Als Nachteil dieser Positionsmeßeinrichtung hat sich herausgestellt, daß sich auf der Oberfläche des Glasmaßstabes eine elektrische Ladung ansammelt, die so groß werden kann, daß über die Abtasteinheit eine sprunghafte Entladung erfolgt. Diese sprunghafte Entladung verursacht einen elektrischen Impuls, der als Störimpuls wirkt und insbesondere bei inkrementalen Meßsystemen von der Auswerteeinheit als Zählimpuls oder als Referenzmarkenimpuls interpretiert wird.

In der US-PS 5,030,825 ist eine Winkelmeßeinrichtung beschrieben, bei der zur Abtastung eines Maßstabes mehrere Photodetektoren vorgesehen sind. Zwischen dem Maßstab und den Photodetektoren ist eine Abtastplatte angeordnet. Diese Abtastplatte ist aus einem elektrisch leitenden Material gefertigt und am Bezugspotential (Erde) angeschlossen; sie soll dadurch eine Abschirmung der Photodetektoren gegen elektromagnetische Störfelder bewirken.

Diese Maßnahme hat den Nachteil, daß die Abtastplatte nicht aus transparentem Material hergestellt werden kann, auf die durch bekannte Methoden sehr fein strukturierte Abtast-Markierungen aufgebracht werden können. Weiterhin können vom Maßstab ausgehende Störsignale durch diese Maßnahme nicht verhindert werden.

Die EP-A-0 328 661 offenbart eine lichtelektrische Positionsmeßeinrichtung in Form einer Winkelmeßeinrichtung, bei der lichtempfindliche Empfangselemente zwischen einer elektrisch leitenden Abschirmplatte und einer Abtastplatte angeordnet sind. Die Abschirmplatte sowie das elektrisch leitende Abtastmuster der Abtastplatte sind mit einem Bezugspotential elektrisch kontaktiert.

Eine Aufladung der Codescheibe und eine daraus resultierende sprunghafte Entladung der Codescheibe kann dadurch nicht verhindert werden.

Der Erfindung liegt die Aufgabe zugrunde, bei einer lichtelektrischen Positionsmeßeinrichtung die Störsicherheit zu verbessern.

Diese Aufgabe wird erfindungsgemäß durch die Merkmale des Anspruches 1 gelöst.

In den abhängigen Ansprüchen sind vorteilhafte Ausgestaltungen der Erfindung angegeben.

Die Vorteile der Erfindung liegen darin, daß die positionsabhängigen Abtastsignale nicht von statischen Aufladungen des Maßstabes beeinflußt werden.

Mit Hilfe von Ausführungsbeispielen wird die Erfindung nachstehend anhand der Zeichnungen näher erläutert.

Es zeigt
- Figur 1: eine lichtelektrische inkrementale Längenmeßeinrichtung mit einem ersten Maßstab im Teilschnitt,
- Figur 2: eine Draufsicht des ersten Maßstabes,
- Figur 3: eine Draufsicht eines zweiten Maßstabes,
- Figur 4: eine Draufsicht eires dritten Maßstabes und
- Figur 5: eine Draufsicht eines vierten Maßstabes.

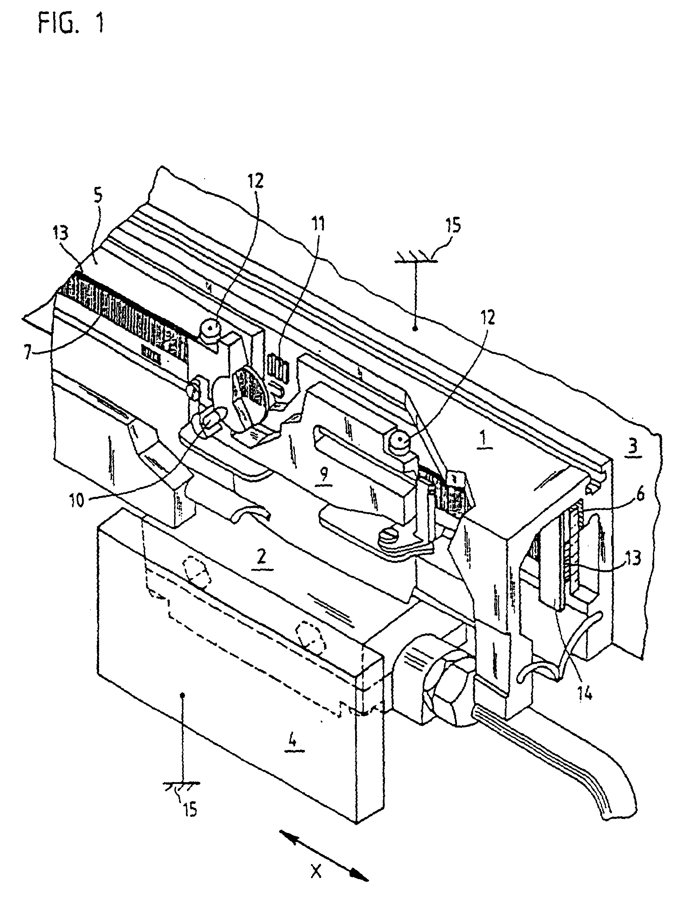

Die Figur 1 zeigt eine lichtelektrische inkrementale Längenmeßeinrichtung bestehend aus den beiden in Meßrichtung X relativ zueinander verschiebbaren Hauptkomponenten Gehäuse 1 und Mitnehmer 2. Das Gehäuse 1 ist an einem ersten Maschinenteil 3 und der Mitnehmer 2 an einem zweiten Maschinenteil 4 befestigt. Das Gehäuse 1 ist aus Metall, in der Regel aus Aluminium und somit elektrisch leitend. Innerhalb des Gehäuses 1 ist ein Maßstab 5 aus Glas befestigt. Die Befestigung erfolgt an einer Fläche des Gehäuses 1 mittels einer elastischen Klebstoffschicht 6. Diese Klebstoffschicht 6 ist elektrisch isolierend. Durch die elastische Klebstoffschicht 6 kann sich der Maßstab 5 bei Temperaturänderungen unabhängig vom Gehäuse 1 frei ausdehnen. Es werden keine Zwangskräfte auf den Maßstab 5 übertragen. Auf dem transparenten Maßstab 5 ist eine Inkrementalteilung 7 aus lichtundurchlässigen Chrom-Markierungen 8 aufgebracht. Diese Inkrementalteilung 7 wird von einer am Mitnehmer 2 befestigten Abtasteinrichtung 9 abgetastet. Diese umfaßt eine Lichtquelle 10 sowie mehrere Photodetektoren 11. Das Licht der Lichtquelle 10 fällt durch die transparenten Bereiche der Teilung 7 und gelangt auf die Photodetektoren 11, wodurch periodische analoge elektrische Abtastsignale erzeugt werden, die in bekannter Weise einer Auswerteeinheit zur Bildung von zählbaren Rechtecksignalen zugeführt werden. Die Abtasteinrichtung 9 stützt sich über Kugellager 12 auf der die Teilung 7 tragenden Oberfläche des Maßstabes 5 federnd ab.

Durch äußere elektrische Felder sowie durch das Abrollen und Gleiten der Kugellager 12 kann sich die Oberfläche des Maßstabes 5 elektrisch aufladen, wodurch ein Potentialunterschied dieser Oberfläche und anderen elektrisch leitenden Teilen der Längenmeßeinrichtung entsteht, der zu einer impulsartigen Entladung führen kann. Diese Entladungen werden den elektrischen Abtastsignalen überlagert, was bei inkrementalen Meßsystemen zu Zählimpulsen und somit zu Zählfehlern oder zu anderen, die Auswerteeinheit störenden Signalen führt.

Um diese elektrischen Aufladungen von der Oberfläche des Maßstabes 5 über die gesamte Länge des Maßstabes 5 abzuführen, ist bei diesem ersten Ausführungsbeispiel eine über die gesamte Meßlänge reichende Schicht 13 aus Chrom auf der Maßstab-Oberfläche aufgebracht, welche die Markierungen 8 der inkrementalen Teilung 7 elektrisch miteinander verbindet. Diese elektrisch leitende Schicht 13 ist an einem Maßstabende mit dem Gehäuse 1 elektrisch leitend verbunden. Hierzu ist ein Blechteil 14 vorgesehen, das mit der Schicht 13 durch Klemmung am Maßstab 5 oder durch Kleben mit elektrisch leitendem Klebstoff am Maßstab 5 sowie am Gehäuse 1 befestigt ist. Dieses Blechteil 14 stellt die elektrische Verbindung der Schicht 13 mit einem Bezugspotential 15 her, da das elektrisch leitende Gehäuse 1 am ersten Maschinenteil 3 elektrisch leitend befestigt ist und das erste Maschinenteil 3 wiederum an das Bezugspotential (Erde, Masse) 15 angeschlossen ist. Um eine gute elektrisch leitende Verbindung zwischen dem Maßstab 5 und dem Gehäuse 1 aus Aluminium herzustellen, ist es erforderlich, das Blechteil 14 an einem nicht eloxierten Bereich mit dem Gehäuse 1 in Kontakt zu bringen.

Um eine elektrische Aufladung der Kugellager 12 zu vermeiden, sind im dargestellten Beispiel auch die Kugellager 12 über den elektrisch leitenden Mitnehmer 2 und dem zweiten Maschinenteil 4 mit dem Bezugspotential 15 verbunden. Die Kugellager 12 rollen außerhalb der Schicht 13 ab, um eine Zerstörung der Schicht 13 durch Abrieb zu verhindern.

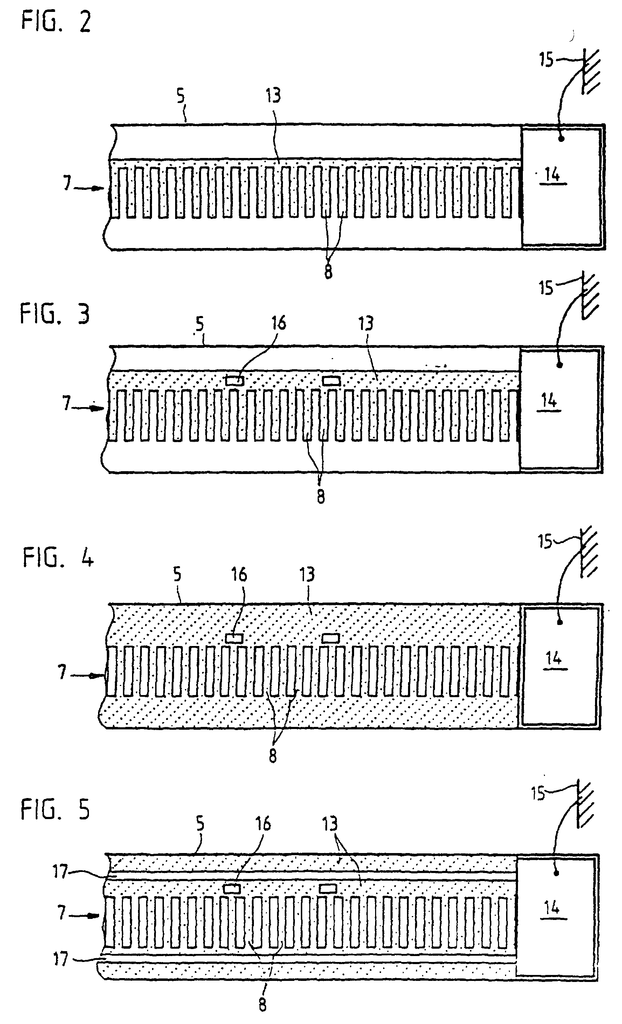

Figur 2 zeigt eine Draufsicht des Maßstabes 5 der Längenmeßeinrichtung gemäß Figur 1. Die Markierungen 8 sowie die verbindende Schicht 13 wurde in einem gemeinsamen Beschichtungsverfahren auf die Oberfläche aufgebracht. Bei diesem, sowie bei den nachfolgend beschriebenen Beispielen werden die Markierungen 8 im Durchlichtverfahren abgetastet. Wenn die Markierungen 8 reflektierend ausgebildet sind, ist auch eine Auflicht-Abtastung möglich. Desweiteren kann die verbindende Schicht 13 auch ein aufgewalzter oder anderweitig mit der Maßstaboberfläche innig in Kontakt gebrachter Metallstreifen sein. Ist diese Schicht 13 oder der Streifen hart genug, können auch die Kugellager 12 darauf abrollen. Die elektrische Verbindung zwischen dem Blechteil 14 und dem Bezugspotential 15 ist nur schematisch dargestellt.

Bei allen Figuren 1 bis 5 werden gleiche Teile mit den gleichen Bezugszeichen versehen.

Gemäß Figur 3 sind in der über die gesamte Meßlänge reichenden Schicht 13 die Referenzmarken 16 als transparente Fenster eingebracht. Mit einem einzigen Lithographie- und Beschichtungsprozeß lassen sich somit die Markierungen 8, die Referenzmarken 16 sowie die verbindende elektrisch leitende Schicht 13 herstellen.

Die Schicht 13 gemäß Figur 4 ist großflächig über die gesamte Oberfläche des Maßstabes 5 aufgebracht und leitet somit die elektrische Ladung besonders gut zu dem Blechteil 14 und somit zu dem Bezugspotential 15 ab.

Bei dem Beispiel nach Figur 5 sind in der Schicht 13 zwei Spuren 17 frei gelassen, auf denen die Kugellager 12 abrollen können. Um die elektrische Ladung auch von den Spuren 17 ableiten zu können, sind die Spuren 17 möglichst schmal.

In nicht gezeigter Weise kann anstelle einer Metallschicht 13 auch eine elektrisch leitende transparente Schicht auf den Maßstab 5 aufgebracht werden. Dies hat den Vorteil, daß diese Schicht die Markierungen 8 optisch nicht stört und somit großflächig auch unter oder über die Markierungen 8 aufgebracht - insbesondere aufgedampft - werden kann.

Besonders vorteilhaft ist es, wenn die elektrisch leitende Verbindung 14 zwischen dem Maßstab 5 und einem relativ dazu stationären Teil 1 hergestellt wird. Diese Verbindung 14 kann besonders stabil, elektrisch gut leitend und daher sicher realisiert werden. Die Verbindung kann aber auch zwischen dem Maßstab 5 und der Abtasteinrichtung 9 bzw. dem Mitnehmer 2 erfolgen, indem ein federnder Schleifkontakt am Mitnehmer 2 befestigt ist, welcher an einem Ende mit dem Bezugspotential 15 verbunden ist und mit dem anderen Ende mit der Oberfläche des Maßstabes 5 in elektrischem Kontakt steht, insbesondere auf den in den Figuren 1 bis 5 dargestellten Schichten 13 schleift.

Anstelle des Blechteiles 14 kann auch ein anderes elektrisch leitendes Verbindungselement eingesetzt werden.

Die Erfindung ist nicht auf die beschriebenen inkrementalen Meßsysteme beschränkt, sondern auch bei absoluten Positionsmeßsystemen einsetzbar.

## Patentansprüche

1. Lichtelektrische Positionsmeßeinrichtung mit einem Maßstab (5) aus elektrisch nicht leitendem Material, der an einem Trägerkörper (1) befestigt ist und Markierungen (8) aufweist, welche von einer in Meßrichtung (X) relativ dazu bewegbaren Abtasteinrichtung (9) mit einer Lichtquelle und Photodetektoren lichtelektrisch abtastbar sind, um positionsabhängige Abtastsignale zu erzeugen, wobei sich die Abtasteinrichtung (9) über Gleit- oder Rollelemente (12) auf einem Oberflächenbereich des Maßstabes (5) abstützt, **dadurch gekennzeichnet, daß** dieser Oberflächenbereich oder zumindest ein nahe daneben angeordneter Oberflächenbereich des relativ zur Abtasteinreichtung nicht fixierten Maßstabes (5) mit einem elektrisch leitenden Material (13) in elektrischen Kontakt steht, und daß ein elektrisch leitendes Verbindungselement (14) zwischen diesem Material (13) und einem Bezugspotential (15) vorgesehen ist.

2. Lichtelektrische Positionsmeßeinrichtung nach Anspruch 1, **dadurch gekennzeichnet, daß** der Maßstab (5) aus Glas oder Glaskeramik besteht, der über eine elektrisch isolierende Schicht (6) an einem Trägerkörper (1) befestigt ist.

3. Lichtelektrische Positionsmeßeinrichtung nach Anspruch 1, **dadurch gekennzeichnet, daß** ein Oberflächenbereich des Maßstabes (5) über den gesamten Meßbereich ununterbrochen mit einer elektrisch leitenden Schicht (13) versehen ist, und daß diese Schicht (13) über das Verbindungselement (14) mit dem Bezugspotential (15) elektrisch leitend verbunden ist.

4. Lichtelektrische Positionsmeßeinrichtung nach Anspruch 1, **dadurch gekennzeichnet, daß** die lichtelektrisch abtastbaren Markierungen (8) eine Folge von in Meßrichtung (X) voneinander beabstandeten und hintereinander angeordneten elektrisch leitenden Bereichen einer Schicht (13) sind, und daß diese Bereiche (8) über den gesamten Meßbereich miteinander sowie mit dem Bezugspotential (15) elektrisch leitend verbunden sind.

5. Lichtelektrische Positionsmeßeinrichtung nach Anspruch 3 oder 4, **dadurch gekennzeichnet, daß** die elektrisch leitende Schicht eine transparente Schicht oder eine Metallschicht(13) ist.

6. Lichtelektrische Positionsmeßeinrichtung nach Anspruch 2, **dadurch gekennzeichnet, daß** die elektrisch isolierende Schicht eine elastische Klebstoffschicht (6) ist.

7. Lichtelektrische Positionsmeßeinrichtung nach Anspruch 1, **dadurch gekennzeichnet, daß** das elektrisch leitende Verbindungselement (14) zwischen dem Maßstab (5) und dem elektrisch leitenden Trägerkörper (1) angeordnet ist, und daß der elektrisch leitende Trägerkörper (1) mit dem Bezugspotential (15) elektrisch leitend verbunden ist.

8. Lichtelektrische Positionsmeßeinrichtung nach Anspruch 7, **dadurch gekennzeichnet, daß** der Trägerkörper das Gehäuse (1) des Maßstabes (5) ist.

9. Lichtelektrische Positionsmeßeinrichtung nach Anspruch 7, **dadurch gekennzeichnet, daß** das elektrisch leitende Verbindungselement ein Blechteil (14) ist, das mit einer Fläche an der elektrisch leitenden Oberfläche des Maßstabes (5) und mit einer weiteren Fläche an dem Trägerkörper (1) elektrisch leitend befestigt ist.

10. Lichtelektrische Positionsmeßeinrichtung nach Anspruch 7, **dadurch gekennzeichnet, daß** das elektrisch leitende Verbindungselement ein elektrisch leitfähiger Klebstoff ist.

11. Lichtelektrische Positionsmeßeinrichtung nach Anspruch 1, **dadurch gekennzeichnet, daß** das elektrisch leitende Verbindungselement zwischen dem Maßstab und einem Mitnehmer angeordnet ist, wobei am Mitnehmer die Abtasteinrichtung befestigt ist und der Mitnehmer elektrisch leitend mit dem Bezugspotential in Kontakt steht.

12. Lichtelektrische Positionsmeßeinrichtung nach Anspruch 11, **dadurch gekennzeichnet, daß** das elektrisch leitende Verbindungselement ein Schleif- oder Bürstenkontakt ist, welcher an der Abtasteinrichtung oder an dem Mitnehmer befestigt ist und während der Abtastung entlang des Meßbereiches mit dem elektrisch leitenden Material des elektrisch nicht leitenden Maßstabes in Kontakt steht.

## Claims

1. Photoelectric position measuring device having a scale (5) which is formed from electrically non-conductive material, is secured to a carrying body (1) and has marks (8) which can be scanned photoelectrically by a scanning device (9), moveable relative to the scale in the measuring direction (X), with a light source and photodetectors in order to generate position-dependent scanning signals, the scanning device (9) being supported by slide or roller elements (12) on a surface region of the scale (5), **characterised in that** this surface region or at least a surface region disposed close to same of the scale (5), which is not fixed relative to the scanning device, is in electrical contact with an electrically conductive material (13), and **in that** an electrically conductive connecting element (14) is provided between this material (13) and a reference potential (15).

2. Photoelectric position measuring device according to claim 1, **characterised in that** the scale (5), which is secured to a carrying body (1) by means of an electrically insulating layer (6), consists of glass or glass-ceramics.

3. Photoelectric position measuring device according to claim 1, **characterised in that** a surface region of the scale (5) is provided continuously over the entire measuring area with an electrically conductive layer (13), and **in that** this layer (13) is connected to the reference potential (15) via the connecting element (14) in an electrically conductive manner.

4. Photoelectric position measuring device according to claim 1, **characterised in that** the marks (8) capable of being scanned photoelectrically are a sequence of electrically conductive regions of a layer (13) which are at a spacing from one another and disposed the one behind the other in measuring direction (X), and **in that** these regions (8) are connected in an electrically conductive manner over the entire measuring area to one another and to the reference potential (15).

5. Photoelectric position measuring device according to claim 3 or 4, **characterised in that** the electrically conductive layer is a transparent or metal layer (13).

6. Photoelectric position measuring device according to claim 2, **characterised in that** the electrically insulating layer is an elastic adhesive layer (6).

7. Photoelectric position measuring device according to claim 1, **characterised in that** the electrically conductive connecting element (14) is disposed between the scale (5) and the electrically conductive carrying body (1), and **in that** the electrically conductive carrying body (1) is connected to the reference potential (15) in an electrically conductive manner.

8. Photoelectric position measuring device according to claim 7, **characterised in that** the carrying body is the housing (1) of the scale (5).

9. Photoelectric position measuring device according to claim 7, **characterised in that** the electrically conductive connecting element is a sheet-metal part (14) which is secured in an electrically conductive manner to the electrically conductive surface of the scale (5) with one surface, and to the carrying body (1) with another surface.

10. Photoelectric position measuring device according to claim 7, **characterised in that** the electrically conductive connecting element is an electrically conductive adhesive.

11. Photoelectric position measuring device according to claim 1, **characterised in that** the electrically conductive connecting element is disposed between the scale and a catch, the scanning device being secured to the catch and the catch being in contact with the reference potential in an electrically conductive manner.

12. Photoelectric position measuring device according to claim 11, **characterised in that** the electrically conductive connecting element is a sliding or brush contact which is secured to the scanning device or to the catch and during the scanning process is in contact along the measuring area with the electrically conductive material of the electrically non-conductive scale.

## Revendications

1. Dispositif opto-électrique de mesure de positions, comportant une règle (5) en un matériau non conducteur de l'électricité qui est fixée à un corps-support (1) et porte des marques (8) qui sont palpées par voie opto-électrique par un dispositif de balayage (9) mobile par rapport à la règle dans la direction de mesure (X), formé d'une source lumineuse et de détecteurs photo-électriques, aux fins de produire des signaux de palpage dépendants de la position, le dispositif de balayage (9) prenant appui par des éléments de glissement ou de roulement (12) sur une partie de la surface de la règle (5), **caractérisé en ce que** ladite partie de surface ou au moins une partie de surface de la règle (5) située dans le voisinage immédiat de celle-ci, non fixe par rapport au dispositif de balayage, est en contact électrique avec un matériau (13) électro-conducteur et **en ce qu'**un élément de liaison (14) électro-conducteur est prévu entre ledit matériau (13) et un potentiel de référence (15).

2. Dispositif opto-électrique de mesure de positions selon la revendication 1, **caractérisé en ce que** la règle (5) est en verre ou en vitrocéramique et est fixée sur un corps-support (1) au moyen d'une couche (6) électriquement isolante.

3. Dispositif opto-électrique de mesure de positions selon la revendication 1, **caractérisé en ce qu'**une partie de surface de la règle (5) est pourvue sur toute la zone de mesure d'une couche (13) électro-conductrice continue, et **en ce que** ladite couche (13) est reliée de manière électro-conductrice au potentiel de référence (15) par l'intermédiaire de l'élément de liaison (14).

4. Dispositif opto-électrique de mesure de positions selon la revendication 1, **caractérisé en ce que** les marques (8) palpées par voie opto-électrique sont une succession de plages électro-conductrices d'une couche (13), disposées les unes derrière les autres dans la direction de mesure (X), et **en ce que** ces plages (8), sur toute la zone de mesure, sont reliées de manière électro-conductrice entre elles et au potentiel de référence (15).

5. Dispositif opto-électrique de mesure de positions selon la revendication 3 ou 4, **caractérisé en ce que** la couche électro-conductrice est une couche transparente ou une couche métallique (13).

6. Dispositif opto-électrique de mesure de positions selon la revendication 2, **caractérisé en ce que** la couche électriquement isolante est une couche d'adhésif (6) élastique.

7. Dispositif opto-électrique de mesure de positions selon la revendication 1, **caractérisé en ce que** l'élément de liaison (14) électro-conducteur est disposé entre la règle (5) et le corps-support (1) électro-conducteur et **en ce que** le corps-support (1) électro-conducteur est relié de manière électro-conductrice au potentiel de référence (15).

8. Dispositif opto-électrique de mesure de positions selon la revendication 7, **caractérisé en ce que** le corps-support est le boîtier (1) de la règle (5).

9. Dispositif opto-électrique de mesure de positions selon la revendication 7, **caractérisé en ce que** l'élément de liaison (14) électro-conducteur est une pièce en tôle (14) qui est fixée de manière électro-conductrice, par une surface, à la surface électro-conductrice de la règle (5) et par une autre surface au potentiel de référence (15).

10. Dispositif opto-électrique de mesure de positions selon la revendication 7, **caractérisé en ce que** l'élément de liaison électro-conducteur est un adhésif conducteur du courant électrique.

11. Dispositif opto-électrique de mesure de positions selon la revendication 1, **caractérisé en ce que** l'élément de liaison électro-conducteur est disposé entre la règle et un entraîneur, le dispositif de balayage étant fixé à l'entraîneur et étant en contact électro-conducteur avec le potentiel de référence.

12. Dispositif opto-électrique de mesure de positions selon la revendication 11, **caractérisé en ce que** l'élément de liaison électro-conducteur est un contact à frotteur ou à balai qui est fixé sur le dispositif de balayage ou sur l'entraîneur et qui, pendant le balayage le long de la zone de mesure, est en contact avec le matériau électro-conducteur de la règle non conductrice de l'électricité.
